# EUROPEAN PATENT SPECIFICATION

(11) **EP 3 800 972 B1**
(45) Date of publication and mention of the grant of the patent: **31.05.2023**
(21) Application number: 19746201.3
(22) Date of filing: 04.06.2019
(51) Int. Cl.: A01B 23/02, F16B 2/06, F16B 7/04

(54) **FASTENING DEVICE AND METHOD FOR RELEASABLE FIXING OF SOIL WORKING TOOLS TO AN AGRICULTURAL IMPLEMENT**
BEFESTIGUNGSVORRICHTUNG UND VERFAHREN ZUR LÖSBAREN BEFESTIGUNG VON BODENBEARBEITUNGSWERKZEUGEN AN EINEM LANDWIRTSCHAFTLICHEN ARBEITSGERÄT
DISPOSITIF ET PROCÉDÉ DE FIXATION POUR ASSURER UNE FIXATION AMOVIBLE D'OUTILS DE TRAVAIL DU SOL À UN ENGIN AGRICOLE

(30) Priority: 08.06.2018 SE 1850691
(43) Date of publication of application: 14.04.2021
(73) Proprietor: Väderstad Holding AB, 590 21 Väderstad (SE)
(72) Inventor: SÖDERLUND, Peter, 595 91 Mjölby (SE)
(74) Representative: AWA Sweden AB
(86) International application number: PCT/SE2019/050516
(87) International publication number: WO 2019/235996

(56) References cited:
- EP-A1- 2 923 538
- US-A- 612 992
- US-A- 2 584 614

## Description

### Technical Field

This document relates to a fastening device for releasable fixing of a soil working tool to an agricultural implement. It also relates to a soil working tool, an agricultural implement including such a soil working tool and the fastening device, and a method for releasably fixing a soil working tool to an agricultural implement using the fastening device.

### Background

Agricultural implements having a frame, comprising one or more beams, on which beams a plurality of soil working tools are releasably fixable, have been known for some time.

For a number of years, tools such as harrow tines and similar tools are attached with various types of fittings around a longitudinal beam that, especially in recent decades, is often made from a square beam. Other types of fittings, such as angle bars, U beams, round pipes, etc. also exist.

Harrow tines and other tools are usually given a high vibrating capacity in order to break up soil and shake off plant residues as effectively as possible, and are thus often made of spring steel. Another advantage of lending a flexibility to these tools is that they are given the ability to follow the irregularities in the ground and to be able to spring when colliding with obstacles such as stones, rock portions, etc.

However, one problem with vibrations is that the tool will slide along the beam to which it is connected. The fittings used often have a tendency to detach, become loose and are thus inclined to slide on the longitudinal beam, which results in the tool losing its optimal position. In addition, this leads to corrosive attacks on an agricultural implement where the fittings and the tool have slid on the longitudinal beam.

Furthermore, the tools used on agricultural machines are often relatively heavy, and fitting these tools is associated with manual work in uncomfortable working positions. It is therefore desirable that the fitting of tools to, or the removal of tools from, the agricultural implement should be simple and effective, not least so that this can take place out in the field.

SE 535 448 C2 shows a soil working tool for simple fitting to an agricultural implement. The tool is releasably fixable to the agricultural implement by fastening the tool through a beam, via a first and a second opening of the beam, and wherein the tool is attached to the beam using a through bolt in the beam and the tool.

US 612992A discloses a harrow tooth clamp comprising a yoke formed with apertures.

US 2584614A relates to tool clamping means for an agricultural implement.

EP 2923538A1 relates to a locking construction for agricultural machines.

However, there is a need for further improvements in fastening soil working tools relative to tool carrying beams. For example, there is a need to further facilitate and speed up tool change, which often takes place in the field, using simple and only a few tools.

In addition, it is desirable to be able to easily fix the soil working tool in its optimal position with a certain horizontal angle, which is often, but not always, 90 degrees relative to the longitudinal beam.

### Summary

One object of the present invention is thus to provide a fastening device, and a soil working tool, an agricultural implement and a method for fastening a soil working tool to an agricultural implement, which facilitates fastening of the tool and which is furthermore stable during operation.

The invention is defined by the attached independent patent claims. Embodiments are set forth in the dependent patent claims, in the description that follows and in the drawings.

According to a first aspect, a fastening device is provided for fastening a soil working tool to a support, comprising a clamp, comprising a first yoke portion and two shanks, arranged, when fastening the tool, to engage a fastening portion of said tool so that the clamp, viewed from the fastening portion, surrounds the support; an abutment member, comprising a second yoke portion and two bearing portions for bearing on the support, so that, from the support, the abutment member surrounds the first yoke portion; and a pre-tensioning device arranged, when fastening the tool to the support, to pre-tension said first and second yoke portions toward each other.

By the pre-tensioning of the first and second yoke portions toward each other, by the pre-tensioning device, the first yoke portion is pulled in a direction away from the support and the fastening portion is pressed to the support using the shanks.

The tool can be a soil working tool, such as a harrow tine, a cultivator tine, a cutter, a tine supporting a levelling tool (marketed by the Applicant under the brand name CROSSBOARD^{®}), a sowing share, a disc holder or a roller-forming element. Alternatively, the tool can be a scraper for a wheel, a disc, a roller cylinder or the like.

The support can be a part of a frame of an agricultural implement, such as a beam or axle and can have a fully or partly closed cross section, for example quadrilateral tubes (square or rectangular) or round tubes (circular or elliptical). The support can be a crossbeam or a transverse axle.

The shanks can have a length, viewed from between the first yoke portion and a respective engagement portion for the respective shank, wherein the length corresponds to a thickness of the support plus a tension length corresponding to a distance to which the clamp should be tensioned in order to fasten the tool to the support.

The first yoke portion can have a length corresponding to a width of the support plus a desirable clearance so that the clamp can be fitted to the support without causing any damage to it.

The shanks can be substantially closed and provided with openings, adapted in shape and size in order to engage the fastening portion of the tool. Alternatively, the shanks can be substantially open and have the shape of clamps, clinchers, etc. adapted to engage the fastening portion of the tool. Alternatively, the shanks can be substantially closed or open, wherein free ends of the shanks are hook-shaped and adapted to engage the fastening portion of the tool.

"Bearing portions" mean those portions of the abutment member extending from the second yoke portion in a direction toward the support, viewed when using the fastening device. The respective bearing portions have a free end portion which is arranged to bear on the support when fastening the tool.

The bearing portions can have an extension from the second yoke portion corresponding approximately, or at least, to the above-mentioned tension length.

The pre-tensioning device can comprise a threaded rod, such as a bolt, and a nut which is engageable with the threaded rod. The bolt is preferably a coach bolt. The pre-tensioning device can further comprise a washer, a spring washer, a locking washer, etc.

Alternatively, the pre-tensioning device can comprise a threaded rod which is fixed to the first yoke portion of the clamp such that it is not releasable, and a nut which is engageable with the threaded rod, and alternatively, also a washer, a spring washer, a locking washer, etc.

By the bearing portions of the abutment member being arranged to bear on the support when fastening the tool, an abutment to the support is provided when the pre-tensioning device pulls the yoke portion of the clamp in a direction away from the support. This enables fastening of the tool to the support such that the fastening portion of the tool presses against the support using the shanks of the clamp.

The abutment member also functions as a prop for the clamp and counteracts sideways displacement of the clamp along the support or twisting of the clamp. Twisting or sideways displacement of the tool is thus counteracted, which enables a correctly fitted and tightened tool.

Furthermore, when using quadrilateral tubes as supports, the fastening device also causes the tool to be fitted perpendicular to the support automatically, which is often desirable.

The shanks can have respective engagement means, such as openings, arranged to engage the fastening portion.

The openings of the shanks can be arranged to engage a fastening portion of said tool such that the fastening portion of the tool bears on the respective shank when fastening said tool.

At least one of the shanks can have a first locking portion which is arranged, when engaging the fastening portion, to interact with at least a second corresponding locking portion of the fastening portion such that relative movement between the tool and the clamp is prevented in a direction along the fastening portion.

The locking portions can be designed for form-dependent locking in said direction along the fastening portion.

The first locking portion can be arranged at one of the two shanks. Alternatively, both shanks can comprise a locking portion.

The first locking portion can have the shape of a protruding portion, for example in the form of a rectangular pin, which is arranged to engage a second corresponding locking portion, for example in the form of a recess of the fastening portion of the tool. Horizontal displacement of the fastening portion of the tool is counteracted by said at least a first locking portion of at least one of the shanks of the clamp, and correspondingly by at least a second locking portion, for example in the form of a recess of the fastening portion of the tool.

The pre-tensioning device can comprise a threaded rod, such as a bolt.

The threaded rod can have a head so that it forms a bolt. Furthermore, the rod can have anti-rotation means, which are designed to engage corresponding anti-rotation means of one of the yoke portions.

The pre-tensioning device can further comprise a nut, which is engageable with the threaded rod.

Optionally, the pre-tensioning device can comprise a washer, a spring washer, a locking washer, etc.

The bolt is preferably a coach bolt or the like.

One of the yoke portions can have an anti-rotation means arranged to counteract rotation between the yoke portion and the pre-tensioning device.

For example, the anti-rotation means can be a recess adapted in shape and size to interact with the pre-tensioning device such that rotation is counteracted or prevented.

The anti-rotation means combined with the pre-tensioning device provides simple fitting/removal of the soil working tool to the support. For example, by using a pre-tensioning device in the form of a coach bolt and a clamp with an anti-rotation means in the form of a recess adapted for said coach bolt, only a nutrunner is required, without the need for a counteracting tool, in order to fasten the soil working tool to the support.

Said anti-rotation means can comprise a first recess, with which the pre-tensioning device is engageable.

The recess can be adapted in shape and size to engage the pre-tensioning device and to interact in such a way that rotation is prevented.

The recess can be located in a countersink of the yoke portion of the clamp, viewed from one side of the yoke portion which is arranged to bear on the support when fastening the tool. Since the pre-tensioning device comprises a bolt, the bolt head can thus be countersunk in the yoke portion of the clamp when fastening the tool. This promotes an improved and more stable fastening of the tool to the support.

The second yoke portion can comprise a second recess, with which the pre-tensioning device is engageable.

The recess can be adapted in shape and size to engage the pre-tensioning device.

The second yoke portion can have a greater extent than the first yoke portion in at least a first direction, preferably in two directions orthogonal to each other.

The first direction can be a direction along the support and perpendicular to a direction between the shanks of the clamp along the first yoke portion.

The directions orthogonal to each other can be orthogonal to a tension-direction of the pre-tensioning device.

The second yoke portion can at least partly surround the first yoke portion in at least three directions orthogonal to each other.

According to a second aspect, a soil working tool is provided, comprising a fastening portion, arranged to be releasably fixed to a support using a fastening device as described above.

The fastening portion can have at least a second locking portion which is arranged, when engaging the fastening device, to interact with at least a first corresponding locking portion of the clamp, such that relative movement between the tool and the clamp is prevented in a direction along the fastening portion.

Said at least a second locking portion can be a recess, arranged, when fastening the tool, to interact with at least one shank of the clamp of the fastening device so that the fastening portion is releasably fixed to at least one of the shanks.

The fastening portion of the tool can, for example, comprise one or more recesses that are adapted in shape and size to interact directly with at least one of the shanks of the clamp.

Alternatively, the fastening portion of the tool can comprise one or more recesses that are adapted in shape and size to interact with a first locking portion of at least one of the shanks of the clamp. The first locking portion can, for example, have the shape of a protruding portion in the form of a rectangular pin, which is arranged to engage a corresponding recess of the fastening portion of the tool.

Horizontal displacement of the fastening portion of the tool is counteracted by said at least one recess of the fastening portion of the tool and its interaction with at least one shank of the clamp.

According to a third aspect, an agricultural implement is provided, comprising at least one support, at least one fastening device as described above, at least one soil working tool as described above, wherein the tool is releasably fixable to the support using the fastening device.

According to a fourth aspect, a method is provided for releasably fixing a soil working tool to a support comprising affixing a fastening portion of the tool to the support using a clamp, so that the clamp engages the fastening portion and surrounds the support, viewed from the fastening portion; affixing an abutment member on the opposite side of the support, viewed from the fastening portion, so that the abutment member bears on the support and surrounds the clamp, viewed from the support; and pre-tensioning the abutment member and the clamp in a direction toward each other on said opposite side of the support, so that the clamp pre-tensions the fastening portion toward the support.

When the abutment member and the clamp are pre-tensioned in a direction toward each other on said opposite side of the support, the yoke portion of the clamp is pulled in a direction away from the support so that the clamp pre-tensions the fastening portion toward the support by pressing the fastening portion to the support using the shanks.

The step of affixing the fastening portion to the support can comprise bringing the fastening portion to engage a respective opening of the respective shank of the clamp.

The method can further comprise providing a form-dependent locking between the clamp and the fastening portion, such that relative movement between the clamp and the fastening portion in a direction along the fastening portion is counteracted.

A pre-tensioning device can be arranged in anti-rotation engagement with one of the clamp and the abutment member, and wherein the pre-tensioning device operates to tension the other one of the clamp and the abutment member toward the former.

The method can comprise steps in the following order: Step 1: at least a first part of a pre-tensioning device is brought into engagement with the clamp; Step 2: the clamp is affixed to the support; Step 3: the fastening portion is brought into engagement with the clamp; and Step 4: the pre-tensioning device operates to pre-tension the fastening portion toward the support.

The abutment member can be affixed to the clamp after the fastening portion is brought into engagement with the clamp.

Alternatively, the abutment member can be affixed to the clamp before the fastening portion is brought into engagement with the clamp, preferably before the clamp is affixed to the support.

A second part of the pre-tensioning device can be brought into engagement with the first part of the pre-tensioning device before the fastening portion is brought into engagement with the clamp, preferably before the clamp is affixed to the support.

### Brief description of the drawings

Figs 1a-1b schematically show a perspective view of a fastening device according to an embodiment of the specified invention.
Fig. 1c schematically shows a side view of a soil working tool fitted to a support using a fastening device according to an embodiment of the specified invention.
Fig. 2 schematically shows a perspective view of a part of an agricultural implement according to an embodiment of the specified invention.
Fig. 3 schematically shows a perspective view of a part of an agricultural implement according to an embodiment of the specified invention.
Figs 4a-4b schematically show a perspective view of a fastening device and a soil working tool according to an embodiment of the specified invention.
Figs 5a-5b schematically show a perspective view of an agricultural implement being pulled by a tractor.

### Detailed description

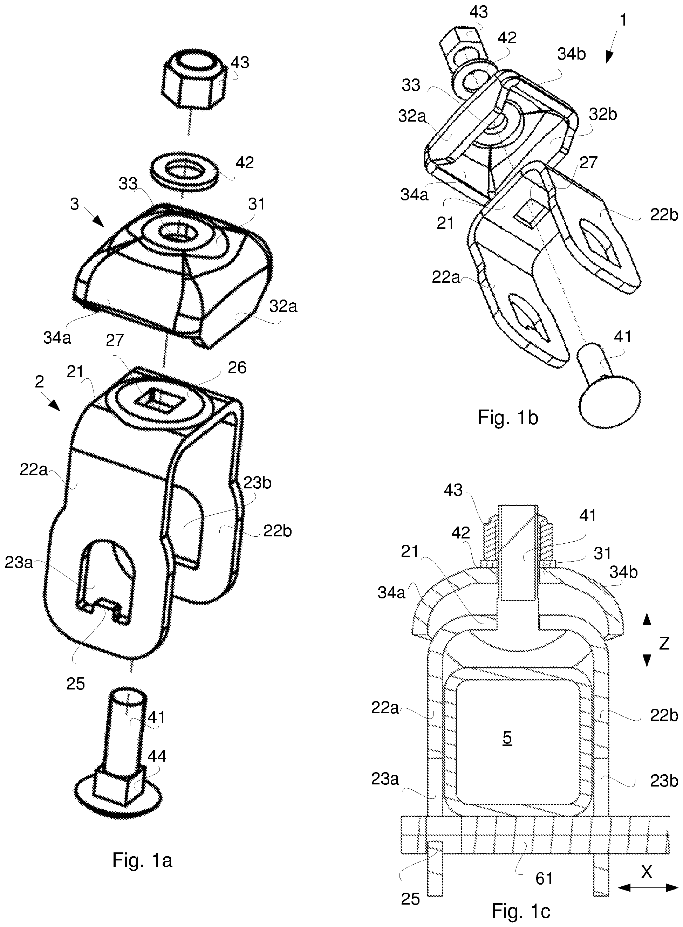

Figs 1a-1c show a fastening device 1 for fastening a soil working tool 6 to a support 5. The soil working tool illustrated in Figs 1-5 is a tool in the form of a harrow tine, but alternative tools are possible, for example a cultivator tine, a cutter, a tine supporting a levelling tool (marketed by the Applicant under the brand name CROSSBOARD^{®}), a sowing share, a disc holder or a roller-forming element. Alternatively, the tool can be a scraper for a wheel, a disc, a roller cylinder or the like.

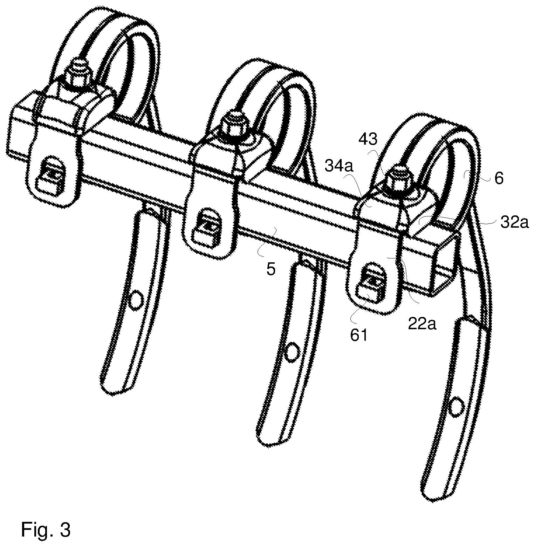

The soil working tool 6 comprises a fastening portion 61 (see Fig. 1c, Fig. 2 and Figs 4a-4b for example) which is adapted in shape and size to be fastened to the support 5 using the fastening device 1 (see Fig. 1c and Fig. 3).

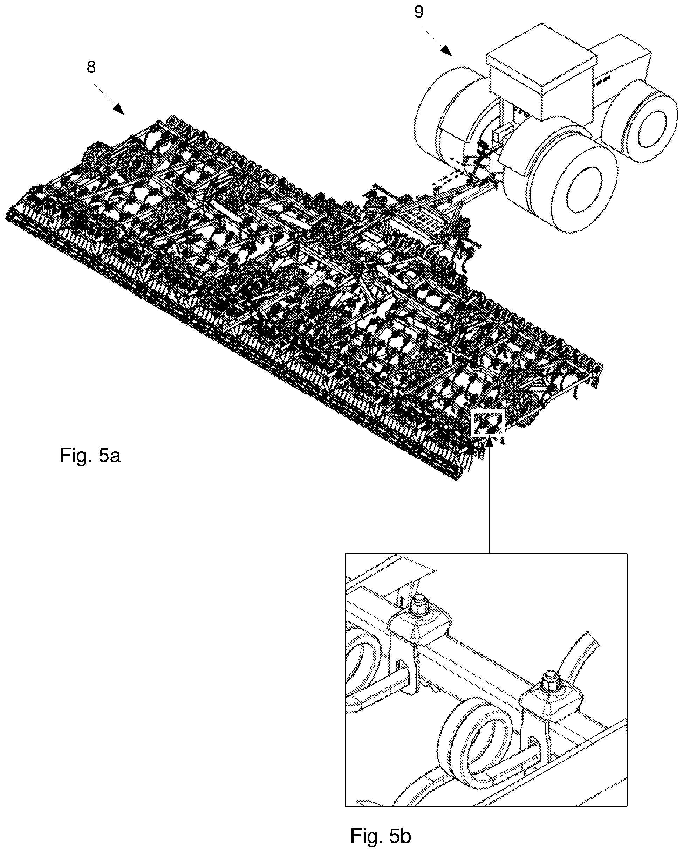

The support 5 can be a part of a frame of an agricultural implement 8, such as a beam or axle (see Figs 5a-5b). Fig. 1c, Figs 2-3 and Fig. 5 illustrate a support 5 in the form of a quadrilateral beam, however, other embodiments of support are possible, for example round tubes (cylindrical or elliptical), U beams, I beams, beams with a fully or partly closed cross section, beams with any desired polygonal cross section, etc.

The fastening device 1 comprises a clamp 2, an abutment member 3 and a pre-tensioning device 41, 42, 43.

The clamp 2 is designed, when fastening the tool 6, to be fitted to the support 5 and to engage the fastening portion 61 of the tool such that the clamp 2 surrounds the support 5, viewed from the fastening portion (see Fig. 1c and Fig. 3).

The clamp 2 comprises a first yoke portion 21 and two shanks 22a, 22b.

The first yoke portion 21 can have a length corresponding to a width of the support 5 plus a desirable clearance so that the clamp 2 can be fitted to the support 5 without causing any damage to it.

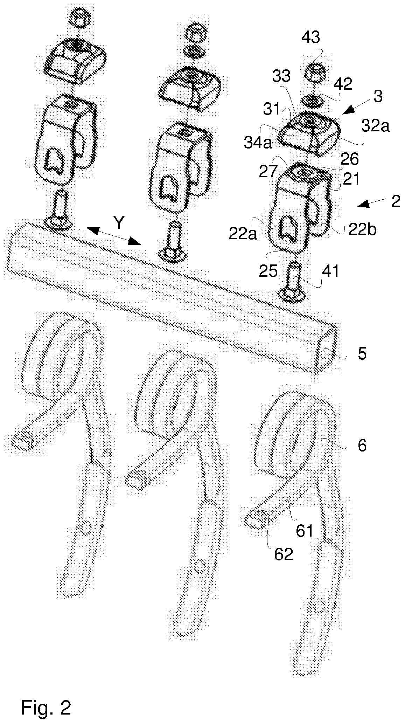

The first yoke portion 21 can further comprise a reinforced portion 26 (see Fig. 1a and Fig. 2). The reinforced portion 26 can be formed by a portion with greater material thickness than surrounding portions of the clamp 2. Alternatively, the first yoke portion 21 can be reinforced with an indentation. When fastening the tool 6, high tensions may occur in the material of the clamp 2. The reinforcement thus prevents deformation of the clamp 2 when fastening the tool 6.

The shanks can extend from respective end portions of the first yoke portion, and preferably perpendicular to the main extension of the first yoke portion, so that the clamp substantially has the form of a U.

Figs 1-5 show a clamp, the shanks of which are provided with engagement members in the form of openings 23a, 23b. The openings 23a, 23b are adapted in shape and size in order to engage the fastening portion 61 of the tool.

Even though Figs 1-5 show a clamp 2, the shanks 22a, 22b of which are provided with openings 23a, 23b, other embodiments are also possible. For example, the shanks 22a, 22b of the clamp can be substantially open and have the shape of clamps, clinchers, etc. (not shown) adapted to engage the fastening portion 61 of the tool. Alternatively, the shanks 22a, 22b can be substantially closed or open, wherein free ends of the shanks are hook-shaped (not shown) and adapted to engage the fastening portion 61 of the tool, or to have another structure with the capacity to provide a form-dependent locking relative to the fastening portion 61 viewed in a direction perpendicular to the main extension of the fastening portion.

Furthermore, the shanks 22a, 22b can have a length, viewed from between the first yoke portion 21 and a respective engagement portion for the respective shank 22a, 22b. The length can correspond to a thickness of the support 5 plus a tension length. The tension length corresponds to a distance that the clamp 2 is able to be pulled with sufficient strength to fasten the tool 6 to the support 5.

Fig. 1c illustrates, viewed from a side view, a fastening portion 61 of a tool which is releasably fixed to a support 5 using the fastening device 1, wherein the shanks of the clamp have a length that corresponds to the thickness of the support 5 plus a tension length.

Furthermore, at least one of the shanks 22a, 22b can have a first locking portion 25. The first locking portion 25 can be arranged at one of the two shanks. Alternatively, both shanks can comprise a first locking portion 25.

The first locking portion 25 is arranged, when engaging the fastening portion 61, to interact with at least a second corresponding locking portion 62 of the fastening portion 61 such that relative movement between the tool 6 and the clamp 2 is prevented in the X direction along the fastening portion.

The locking portions 25, 62 can be designed for form-dependent locking in said direction along the fastening portion.

Figs 1a, 2 and 4a show a clamp 2, where one of the shanks comprises a first locking portion 25 in the form of a protruding portion in the form of a rectangular pin. The protruding portion is arranged to engage a second corresponding locking portion 62, in the form of a recess, of the fastening portion of the tool (see Figs 1c, 2 and Figs 4a-4b for example).

It will be appreciated that, apart from the thickness of the beam and the desired tension length, the length of the shank can be adapted in order to also take into account the length of the pin.

It will be appreciated that the pin can be located, as shown, as a projection from a surface of the shank bearing substantially perpendicularly on the fastening portion 61, such as an inner limit surface of one, or both, openings 23a, 23b.

When fastening the tool 6, the first and second locking portions 25, 62 counteract a horizontal displacement of the fastening portion 61 of the tool.

Other means for releasably fixing the fastening portion 61 of the tool to the clamp 2 are also possible. For example, the fastening portion 61 of the tool can comprise one or more recesses that are adapted in shape and size to interact directly with at least one of the shanks 22a, 22b of the clamp.

The abutment member 3 is designed to surround the first yoke portion 21 when fastening the tool 6 to the support 5. The abutment member 3 forms an abutment when pre-tensioning the clamp 2 to produce the clamping force between the clamp 2 and the fastening portion 61. The abutment member 3 also counteracts sideways displacement of the clamp 2 in the Y direction along the support 5, and counteracts twisting of the clamp 2.

Figs 1a-1b illustrate an abutment member 3 comprising a second yoke portion 31 and two bearing portions 32a, 32b.

The second yoke portion 31 can have a greater extent than the first yoke portion 21 in at least a first direction Y, preferably in two directions X, Y orthogonal to each other.

Furthermore, the second yoke portion 31 can at least partly surround the first yoke portion in at least three directions X, Y, Z orthogonal to each other.

As a result, the abutment member 3 can be adapted in shape and size, when fastening the tool 6, to partly surround the first yoke portion 21, and possibly also a respective portion of the respective shank 22a, 22b adjacent to the first yoke portion 21.

The bearing portions 32a, 32b provide one part of the enclosure and can extend from respective end portions of the second yoke portion, substantially parallel to each other and substantially perpendicular to a central portion of the second yoke portion.

A transition between this central portion and the bearing portions can have a radius of curvature, viewed in a plane YZ, in parallel with the support 5 and perpendicular to the fastening portion 61.

A second part of this enclosure can be provided by the respective skirt portions 34a, 34b, which extend from the central portion and are designed to at least partly surround the first yoke portion 21, viewed in a direction parallel to the fastening portion 61. In the same way, a radius of curvature can be present between the central portion and the skirt portions 34a, 34b, viewed in a plane XZ, in parallel with the fastening portion 61 and perpendicular to the support 5.

The respective bearing portions 32a, 32b have a free end portion, which are arranged to bear on the support 5 when fastening the tool 6 (see Fig. 3). By the bearing portions 32a, 32b of the abutment member being designed to bear on the support 5 when fastening the tool 6, an abutment to the support is provided when the tool is fastened to the support 5.

The bearing portions 32a, 32b can have an extension from the second yoke portion 31 corresponding approximately, or at least, to the above-mentioned tension length.

The pre-tensioning device 4 is designed, when fastening the tool 6 to the support 5, to pre-tension said first and second yoke portions 21, 31 toward each other.

The pre-tensioning device 4 can comprise a threaded rod. The threaded rod can have a head so that it forms a bolt.

The pre-tensioning device 4 can further comprise a nut, which is engageable with the threaded rod. Optionally, the pre-tensioning device can also comprise a washer, a spring washer, a locking washer, etc.

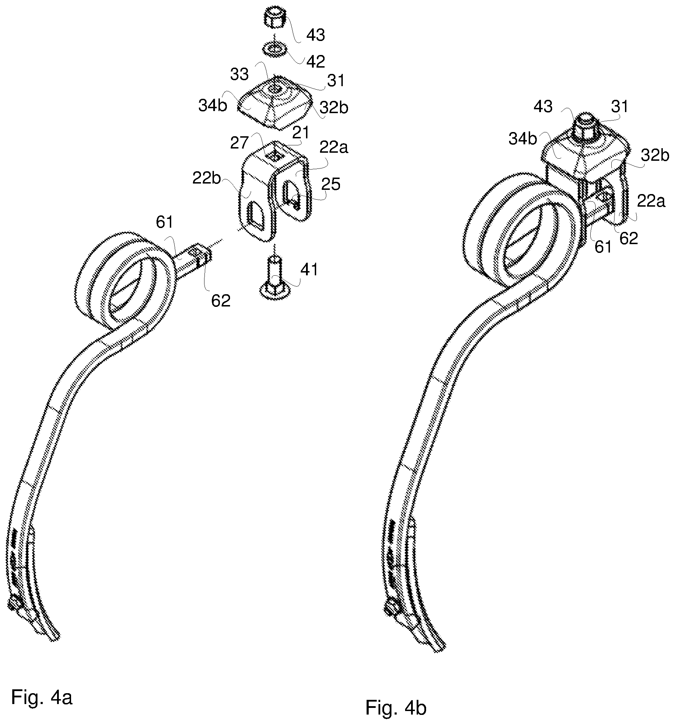

Figs 1 and 4 show an example of a pre-tensioning device, which comprises a coach bolt 41, a washer 42 and a nut 43. The coach bolt 41 is provided with anti-rotation means in the form of an anti-rotation portion 44 (see Fig. 1a).

The anti-rotation portion 44 of the bolt is designed to engage the corresponding anti-rotation means of the first yoke portion 21, in the form of a first recess 27 (see Figs 1a-1b). The recess 27 is adapted in shape and size to engage the coach bolt 41 and to interact with the anti-rotation portion 44 in such a way that rotation is prevented. The recess 27 can be located in a countersink (not shown) of the yoke portion 21 of the clamp, viewed from one side of the yoke portion 21 which is facing the support 5 when fastening the tool 6. The bolt head of the coach bolt 41 can thus be countersunk in the yoke portion 21 of the clamp when fastening the tool 6.

The anti-rotation means of the pre-tensioning device can also, or alternatively, be designed to engage the corresponding anti-rotation means of the second yoke portion 31.

Figs 1a-1b illustrate that the second yoke portion comprises a second recess 33. The second recess is engageable with the coach bolt 41.

The recess 33 can also be adapted in shape and size to engage the pre-tensioning device 4 and to interact with the anti-rotation means in such a way that rotation is prevented.

Although Figs 1a-1b illustrate anti-rotation means in the form of an anti-rotation portion 44 arranged on the pre-tensioning device and a corresponding recess 27 of the first yoke portion 21, other anti-rotation means are also possible. For example, the first or second yoke portion 21, 31 can comprise anti-rotation means in the form of one or more locking portions (not shown) arranged such that they fix the bolt head and thus counteract rotation of the bolt.

In the example shown, the anti-rotation means provides a form-dependent locking using a non-circular hole in the first yoke portion 21, and a likewise non-circular portion 44 of the coach bolt adapted for this purpose.

It will be appreciated that the non-circular hole and the corresponding non-circular portion 44 of the coach bolt can have a square shape, as shown, but also other non-circular shapes are possible. Alternatively, the hole 27 can be designed to be round, but a portion adjacent to the hole can be provided with one or more lugs, which prevent rotation of a bolt head, for example, by engaging the e.g. hexagonal shape of the bolt head.

Although the fastening device according to Figs 1-5 shows a pre-tensioning device comprising a coach bolt 41 and a nut 43, and possibly also a washer 42, other alternatives are also possible.

For example, the pre-tensioning device 4 can comprise a threaded rod which is fixed to the first yoke portion 21 of the clamp 2 such that it is not releasable, and a nut which is engageable with the threaded rod, and alternatively, also a washer, a spring washer, a locking washer, etc. and by those means an anti-rotation means in the form of a permanent fixing of the rod to the first yoke portion is achieved.

The soil working tool 6 and the fastening device 1 can be fitted to an agricultural implement 8. The agricultural implement 8 comprises at least one, but preferably a plurality of supports 5, as described above, at least one fastening device 1 as described above, and at least one soil working tool 6 as described above. The tool 6 is releasably fixable to the support 5 using the fastening device 1.

Figs 2-3 show a part of such an agricultural implement comprising a support 5 in the form of a square beam, three soil working tools 6 in the form of harrow tines, and three fastening devices 1. The fastening devices can have the same, or alternatively different, embodiments.

Figs 5a-5b show an agricultural implement 8 in the form of a harrow, which is intended to be pulled by a vehicle 9, preferably a tractor.

Next, with reference to Figs 2-3, a method for releasably fixing a soil working tool 6 to a support 5 is described. Fig. 2 shows an exploded view with the soil working tool 6 and the fastening device 1 in a removed state. Fig. 3 shows the soil working tool 6 fitted to the support 5 using the fastening device 1, so that it is releasably fixed to the support 5.

The method comprises affixing a fastening portion 61 of the tool 6 to the support 5 using a clamp 2, so that the clamp 2 engages the fastening portion 61 and surrounds the support 5, viewed from the fastening portion.

In accordance with the fastening device 1 illustrated in Figs 2-3, the step of affixing the fastening portion 61 to the support 5 can comprise bringing the coach bolt 41 into engagement with the corresponding recess 27 of the first yoke portion 21 of the clamp 2 (see Fig. 2), fitting the clamp 2 with the coach bolt 41 to the support 5, such that the first yoke portion 21 of the clamp 2 bears on the support 5, and bringing the fastening portion 61 into engagement with the respective openings 23a, 23b of the respective shanks 22a, 22b of the clamp 2 (see Fig. 3) by a movement along the main extension of the fastening portion and perpendicular to the main surface of the shanks. Thus the clamp 2 is brought into engagement with the fastening portion 61 of the tool on the support 5, and thus surrounds the support 5 (see Fig. 3).

The method further comprises affixing an abutment member 3 on the opposite side of the support 5, viewed from the fastening portion 61, so that the abutment member 3 bears on the support 5 and surrounds the clamp 2, viewed from the support 5.

Thus the fastening portion 61 will be located on one side of the support 5 and on the opposite side of the abutment member 3, viewed from the fastening portion. The shanks 22a, 22b of the clamp thus extend from the fastening portion and to the opposite side of the beam where the first yoke portion 21 is located. The first yoke portion 21 is located nearer the support 5 than the yoke portion 31 of the abutment member 3. This means that when the yoke portion 21 and the yoke portion 31 are pre-tensioned toward each other, the yoke portion 21 is pulled in a direction away from the support 5, wherein the shanks in turn pull the fastening portion 61 toward the support 5, so that the fastening portion 61 is locked in a mainly force-dependent way to the support 5.

Fig. 3 shows how free ends of the abutment portions 32a, 32b of the abutment member bear on the support 5 on each opposite side of the first yoke portion 21 of the clamp 2.

The method further comprises pre-tensioning the abutment member 3 and the clamp 2 in a direction toward each other (also see Fig. 1c) on said opposite side of the support 5, so that the clamp 2 pre-tensions the fastening portion 61 to the support 5 (see Fig. 3).

Pre-tensioning can be provided using a pre-tensioning device 4, for example in the form of a coach bolt 41, which is tightened with a nut 43 and possibly also a washer 42 (see Fig. 2).

In accordance with the fastening device 1 illustrated in Figs 2-3, the abutment member 3 and the clamp 2 are pre-tensioned in a direction toward each other such that a coach bolt 41 engages the respective recesses 27, 33 of the first and the second yoke portion 21, 31, respectively, wherein the bolt is tightened using a nut 43, and possibly also a washer, to the second yoke portion 31.

The pre-tensioning device 4 can further be arranged in anti-rotation engagement with one of the clamp 2 and the abutment member 3, wherein the pre-tensioning device 4 operates to tension the other one of the clamp 2 and the abutment member 3 toward the former.

The coach bolt illustrated in Figs 2-3 is arranged in anti-rotation engagement with the recess 27 of the yoke portion 21 of the clamp. As a result, only a nutrunner is required, without the need for a counteracting tool, in order to tighten the nut and thus pre-tension the fastening portion 61 to the support 5.

Furthermore, by the bearing portions 32a, 32b of the abutment member being arranged to bear on the support 5 when fastening the tool 6 (see Fig. 3), an abutment to the support 5 is provided when the pre-tensioning device 4 pulls the yoke portion 21 of the clamp in a direction away from the support 5. This enables fastening of the tool to the support 5 such that the fastening portion 61 of the tool is pressed against the support 5 using the clamp 2 (see Fig. 3).

Furthermore, the method can comprise the step of providing a form-dependent locking between the clamp 2 and the fastening portion 61. This counteracts relative movement between the clamp and the fastening portion in a direction along the fastening portion. Locking can be provided using at least a first locking portion 25 of at least one of the shanks 22a, 22b, and at least a second corresponding locking portion 62 of the engagement portion 61 of the tool, as described above.

Figs 2-3 show a locking using a first locking portion 25 in the form of a rectangular pin, arranged at one of the shanks of the clamp, and a second corresponding locking portion 62 in the form of a recess. Locking is provided preferably in connection with or after the step of affixing the fastening portion 61 to the support 5.

According to a first alternative, fitting a tool to the support 5 can be effected so that the bolt 41 is first brought into engagement with the clamp 2, after which the clamp can be arranged to surround the support 5. Then the engagement portion 61 is moved into the openings 23a, 23b, after which the abutment member 3 is affixed, followed by the nut 43 being brought into engagement with the bolt and tightened.

According to a second alternative, the clamp can be pre-fitted in as much as the bolt 41 is brought into engagement with the clamp 2, after which the abutment member 3 is brought into engagement with the bolt 41 and the nut 43 is brought into engagement with the bolt 41. However, the bolt is only tightened enough so that it is still possible to move the engagement portion 61 into the openings 23a, 23b after the clamp 2 has been affixed to the support 5.

It will be appreciated that the anti-rotation portion 44 of the coach bolt can have an extension in the axial direction of the coach bolt which is greater than the extension of the locking portion 25 in the axial direction of the coach bolt. Consequently, this reduces the risk of losing the engagement between the anti-rotation portion 44 and the clamp when the bolt and the abutment member 3 are pre-fitted to the clamp 2 before the engagement portion 61 is brought into engagement with the clamp 2.

## Claims

1. Agricultural implement (8), comprising:
at least one support (5),
at least one soil working tool (6),
wherein the tool (6) is releasably fixable to the support (5) using a fastening device (1),
wherein
the soil working tool (6) comprises a fastening portion (61), arranged to be releasably fixed to the support (5) by using the fastening device (1) for fastening the soil working tool (6) to the support (5),
wherein the fastening device (1)
comprises:
a clamp (2), comprising a first yoke portion (21) and two shanks (22a, 22b), arranged, when fastening the tool, to engage a fastening portion (61) of said tool (6) so that the clamp surrounds the support (5);
an abutment member (3), comprising a second yoke portion (31) and two bearing portions (32a, 32b) for bearing on the support (5), so that the abutment member (3) surrounds the first yoke portion (21); and
a pre-tensioning device (4) arranged, when fastening the tool (6) to the support (5), to pre-tension said first and second yoke portions (21, 31) toward each other,
**characterized in that**
at least one of the shanks (22a, 22b) has a first locking portion (25) which is arranged, when engaging the fastening portion (61), to interact with at least a second corresponding locking portion (62) of the fastening portion (61) such that relative movement between the tool (6) and the clamp (2) is prevented in a direction along the fastening portion.

2. Agricultural implement (8) according to Claim 1, wherein the shanks (22a, 22b) have respective engagement means, such as openings (23a, 23b), arranged to engage the fastening portion (61).

3. Agricultural implement (8) according to any one of the preceding claims, wherein the pre-tensioning device (4) comprises a threaded rod, such as a bolt (41).

4. Agricultural implement (8) according to any one of the preceding claims, wherein one of the yoke portions (21, 31) has an anti-rotation means arranged to counteract rotation between the yoke portion (21, 31) and the pre-tensioning device (4), said anti-rotation means preferably comprising a first recess (27), with which the pre-tensioning device (4) is engageable.

5. Agricultural implement (8) according to any one of the preceding claims, wherein the second yoke portion (31) comprises a second recess (33), with which the pre-tensioning device (4) is engageable.

6. Agricultural implement (8) according to any one of the preceding claims, wherein the second yoke portion (31) has a greater extent than the first yoke portion (21) in at least a first direction, preferably in two directions orthogonal to each other.

7. Agricultural implement (8) according to any one of the preceding claims, wherein the second yoke portion (31) at least partly surrounds the first yoke portion (21) in at least three directions orthogonal to each other.

8. Agricultural implement (8) according to any one of the preceding claims, wherein the fastening portion has at least a second locking portion (62) which is engageable with the fastening device (1), to interact with at least a first corresponding locking portion (25) of the clamp (2), such that relative movement between the tool (6) and the clamp (2) is prevented in a direction along the fastening portion.

9. Agricultural implement (8) to Claim 8, wherein said at least a second locking portion (62) is a recess, which is fastenable with the tool (6), to interact with at least one shank (22a, 22b) of the clamp (2) of the fastening device so that the fastening portion (61) is releasably fixed to at least one of the shanks (22a, 22b).

10. Method for releasably fixing a soil working tool (6) to a support (5) comprising:
affixing a fastening portion (61) of the tool (6) to the support (5) using a clamp (2), so that the clamp engages the fastening portion and surrounds the support (5),
affixing an abutment member (3) on the opposite side of the support (5), so that the abutment member (3) bears on the support (5) and surrounds the clamp (2), and
pre-tensioning the abutment member (3) and the clamp (2)
in a direction toward each other on said opposite side of the support (5), so that the clamp (2) pre-tensions the fastening portion (61) toward the support (5),
wherein a pre-tensioning device (4) is arranged in anti-rotation engagement with one of the clamp (2) and the abutment member (3), and wherein the pre-tensioning device (4) operates to tension the other one of the clamp (2) and the abutment member (3) toward the former, and
**characterized in that** the method further comprises
providing a form-dependent locking between the clamp (2) and the fastening portion (61), such that relative movement between the clamp and the fastening portion in a direction along the fastening portion is counteracted.

11. Method according to Claim 10, wherein the step of affixing the fastening portion (61) to the support (5) comprises bringing the fastening portion (61) to engage a respective opening (23a, 23b) of the respective shank (22a, 22b) of the clamp (2).

12. Method according to any one of Claims 10 or 11, wherein the method comprises steps in the following order:
Step 1: at least a first part (41) of a pre-tensioning device (4) is brought into engagement with the clamp (2),
Step 2: the clamp (2) is affixed to the support (5),
Step 3: the fastening portion (61) is brought into engagement with the clamp (2), and
Step 4: the pre-tensioning device (41, 43) operates to pre-tension the fastening portion (61) toward the support (5).

13. Method according to Claim 12, wherein the abutment member (3) is affixed to the clamp (2) after the fastening portion (61) is brought into engagement with the clamp (2).

14. Method according to Claim 12, wherein the abutment member (3) is affixed to the clamp (2) before the fastening portion (61) is brought into engagement with the clamp (2), preferably before the clamp is affixed to the support (5).

15. Method according to Claim 14, wherein a second part (43) of the pre-tensioning device is brought into engagement with the first part (41) of the pre-tensioning device before the fastening portion (61) is brought into engagement with the clamp (2), preferably before the clamp is affixed to the support (5).

## Patentansprüche

1. Landwirtschaftliches Gerät (8), umfassend:
mindestens einen Träger (5),
mindestens ein Bodenbearbeitungswerkzeug (6),
wobei das Werkzeug (6) unter Verwendung einer Befestigungsvorrichtung (1) lösbar an dem Träger (5) befestigbar ist,
wobei
das Bodenbearbeitungswerkzeug (6) einen Befestigungsabschnitt (61) umfasst, der angeordnet ist, um unter Verwendung der
Befestigungsvorrichtung (1) lösbar an dem Träger (5) befestigt zu sein, um das Bodenbearbeitungswerkzeug (6) an dem Träger (5) zu befestigen,
wobei die Befestigungsvorrichtung (1) umfasst:
eine Klemme (2), die einen ersten Jochabschnitt (21) und zwei Schenkel (22a, 22b) umfasst, die so angeordnet sind, dass sie, wenn das Werkzeug befestigt wird, in einen Befestigungsabschnitt (61) des Werkzeugs (6) eingreifen, so dass die Klemme den Träger (5) umgibt;
ein Anschlagelement (3), das einen zweiten Jochabschnitt (31) und zwei Lagerabschnitte (32a, 32b) zur Auflage auf dem Träger (5) umfasst, so dass das Anschlagelement (3) den ersten Jochabschnitt (21) umgibt; und
eine Vorspannvorrichtung (4), die so angeordnet ist, dass sie, wenn das Werkzeug (6) an dem Träger (5) befestigt wird, den ersten und den zweiten Jochabschnitt (21, 31) gegeneinander vorspannt,
**dadurch gekennzeichnet, dass**
mindestens einer der Schenkel (22a, 22b) einen ersten Verriegelungsabschnitt (25) aufweist, der so angeordnet ist, dass er, wenn er in den Befestigungsabschnitt (61) eingreift, mit mindestens einem zweiten entsprechenden Verriegelungsabschnitt (62) des Befestigungsabschnitts (61) zusammenwirkt, so dass eine relative Bewegung zwischen dem Werkzeug (6) und der Klemme (2) in einer Richtung entlang des Befestigungsabschnitts verhindert wird.

2. Landwirtschaftliches Gerät (8) nach Anspruch 1, wobei die Schenkel (22a, 22b) entsprechende Eingriffsmittel, wie Öffnungen (23a, 23b), aufweisen, die so angeordnet sind, dass sie in den Befestigungsabschnitt (61) eingreifen.

3. Landwirtschaftliches Gerät (8) nach einem der vorhergehenden Ansprüche, wobei die Vorspannvorrichtung (4) eine Gewindestange, wie einen Bolzen (41), umfasst.

4. Landwirtschaftliches Gerät (8) nach einem der vorhergehenden Ansprüche, wobei einer der Jochabschnitte (21, 31) ein Verdrehsicherungsmittel aufweist, das so angeordnet ist, dass es einer Drehung zwischen dem Jochabschnitt (21, 31) und der Vorspannvorrichtung (4) entgegenwirkt, wobei das Verdrehsicherungsmittel vorzugsweise eine erste Vertiefung (27) umfasst, mit der die Vorspannvorrichtung (4) in Eingriff bringbar ist.

5. Landwirtschaftliches Gerät (8) nach einem der vorhergehenden Ansprüche, wobei der zweite Jochabschnitt (31) eine zweite Vertiefung (33) umfasst, mit der die Vorspanneinrichtung (4) in Eingriff bringbar ist.

6. Landwirtschaftliches Gerät (8) nach einem der vorhergehenden Ansprüche, wobei der zweite Jochabschnitt (31) in mindestens einer ersten Richtung, vorzugsweise in zwei zueinander orthogonalen Richtungen, eine größere Erstreckung aufweist als der erste Jochabschnitt (21).

7. Landwirtschaftliches Gerät (8) nach einem der vorhergehenden Ansprüche, wobei der zweite Jochabschnitt (31) den ersten Jochabschnitt (21) in mindestens drei zueinander orthogonalen Richtungen zumindest teilweise umgibt.

8. Landwirtschaftliches Gerät (8) nach einem der vorhergehenden Ansprüche, wobei der Befestigungsabschnitt mindestens einen zweiten Verriegelungsabschnitt (62) aufweist, der mit der Befestigungsvorrichtung (1) in Eingriff bringbar ist, um mit mindestens einem ersten entsprechenden Verriegelungsabschnitt (25) der Klemme (2) zusammenzuwirken, so dass eine relative Bewegung zwischen dem Werkzeug (6) und der Klemme (2) in einer Richtung entlang des Befestigungsabschnitts verhindert wird.

9. Landwirtschaftliches Gerät (8) nach Anspruch 8, wobei der mindestens eine zweite Verriegelungsabschnitt (62) eine Vertiefung ist, die mit dem Werkzeug (6) befestigbar ist, um mit mindestens einem Schenkel (22a, 22b) der Klemme (2) der Befestigungsvorrichtung zusammenzuwirken, so dass der Befestigungsabschnitt (61) lösbar an mindestens einem der Schenkel (22a, 22b) befestigt ist.

10. Verfahren zum lösbaren Befestigen eines Bodenbearbeitungswerkzeugs (6) an einem Träger (5), umfassend:
Anbringen eines Befestigungsabschnitts (61) des Werkzeugs (6) an dem Träger (5) unter Verwendung einer Klemme (2), so dass die Klemme in den Befestigungsabschnitt eingreift und den Träger (5) umgibt,
Anbringen eines Anschlagelements (3) auf der gegenüberliegenden Seite des Trägers (5), so dass das Anschlagelement (3) auf dem Träger (5) aufliegt und die Klemme (2) umgibt, und
Vorspannen des Anschlagelements (3) und der Klemme (2) in einer Richtung hin zueinander auf der gegenüberliegenden Seite des Trägers (5), so dass die Klemme (2) den Befestigungsabschnitt (61) hin zu dem Träger (5) vorspannt,
wobei eine Vorspannvorrichtung (4) in drehfestem Eingriff mit einer/m von der Klemme (2) und dem Anschlagelement (3) angeordnet ist, und wobei die Vorspannvorrichtung (4) wirkt, um die/das andere von der Klemme (2) und dem Anschlagelement (3) in Richtung der/dem ersteren zu spannen, und
**dadurch gekennzeichnet, dass** das Verfahren ferner umfasst:
Bereitstellen einer formabhängigen Verriegelung zwischen der Klemme (2) und dem Befestigungsabschnitt (61), so dass einer relativen Bewegung zwischen der Klemme und dem Befestigungsabschnitt in einer Richtung entlang des Befestigungsabschnitts entgegengewirkt wird.

11. Verfahren nach Anspruch 10, wobei der Schritt zum Anbringen des Befestigungsabschnitts (61) an dem Träger (5) ein Ineingriffbringen des Befestigungsabschnitts (61) mit einer entsprechenden Öffnung (23a, 23b) des entsprechenden Schenkels (22a, 22b) der Klemme (2) umfasst.

12. Verfahren nach einem der Ansprüche 10 oder 11, wobei das Verfahren Schritte in der folgenden Reihenfolge umfasst:
Schritt 1: mindestens ein erster Teil (41) einer Vorspannvorrichtung (4) wird mit der Klemme (2) in Eingriff gebracht,
Schritt 2: die Klemme (2) wird auf dem Träger (5) angebracht,
Schritt 3: der Befestigungsabschnitt (61) wird mit der Klemme (2) in Eingriff gebracht, und
Schritt 4: die Vorspannvorrichtung (41, 43) wirkt, um den Befestigungsabschnitt (61) in Richtung des Trägers (5) vorzuspannen.

13. Verfahren nach Anspruch 12, wobei das Anschlagelement (3) an der Klemme (2) angebracht wird, nachdem der Befestigungsabschnitt (61) mit der Klemme (2) in Eingriff gebracht wurde.

14. Verfahren nach Anspruch 12, wobei das Anschlagelement (3) an der Klemme (2) angebracht wird, bevor der Befestigungsabschnitt (61) mit der Klemme (2) in Eingriff gebracht wird, vorzugsweise bevor die Klemme an dem Träger (5) angebracht wird.

15. Verfahren nach Anspruch 14, wobei ein zweiter Teil (43) der Vorspannvorrichtung mit dem ersten Teil (41) der Vorspannvorrichtung in Eingriff gebracht wird, bevor der Befestigungsabschnitt (61) mit der Klemme (2) in Eingriff gebracht wird, vorzugsweise bevor die Klemme an dem Träger (5) angebracht wird.

## Revendications

1. Engin agricole (8), comprenant :
au moins un support (5),
au moins un outil de travail du sol (6),
l'outil (6) pouvant être fixé de manière amovible au support (5) en utilisant un dispositif de fixation (1),
dans lequel l'outil de travail du sol (6) comprend une section de fixation (61) conçue pour être fixée de manière amovible au support (5) en utilisant le dispositif de fixation (1) pour fixer l'outil de travail du sol (6) au support (5),
le dispositif de fixation (1) comprenant :
un collier (2) comprenant une première section d'étrier (21) et deux tiges (22,22b) conçues pour, lors de la fixation de l'outil, s'engager dans une section de fixation (61) dudit outil (6) de manière à ce que le collier entoure le support (5) ;
un élément de butée (3), comprenant une seconde section d'étrier (31) et deux sections porteuses (32a, 32b) servant de palier sur le support (5), de sorte que l'élément de butée (3) entoure la première section d'étrier (21) ; et
un dispositif de pré-tension (4) conçu pour, lors de la fixation de l'outil (6) au support (5), précontraindre lesdites première et seconds sections de collier (21,31) l'une vers l'autre,
**caractérisé en ce**
**qu'**au moins une des tiges (22,22b) comporte une première section de verrouillage (25) qui est conçue pour, lors de l'engagement dans la section de fixation (61), interagir avec au moins une seconde section de verrouillage correspondante (62) de la section de fixation (61), de sorte que le mouvement relatif entre l'outil (6) et le collier (2) est empêché dans un sens le long de la section de fixation.

2. Engin agricole (8) selon la revendication 1, dans lequel les tiges (22,22b) comportent des moyens d'engagement respectifs, comme des ouvertures (23a, 23b), conçues pour s'engager dans la section de fixation (61).

3. Engin agricole (8) selon l'une quelconque des revendications précédentes, dans lequel le dispositif de pré-tension (4) comprend une barre filetée, comme un boulon (41).

4. Engin agricole (8) selon l'une quelconque des revendications précédentes, dans lequel une des sections d'étrier (21,31) comporte un moyen anti-rotation conçu pour contrer la rotation entre la section d'étrier (21,31) et le dispositif de pré-tension (4), ledit moyen anti-rotation comprenant de préférence un premier retrait (27) dans lequel le dispositif de pré-tension (4) peut s'engager.

5. Engin agricole (8) selon l'une quelconque des revendications précédentes, dans lequel la seconde section d'étrier (31) comprend un second retrait (33) dans lequel le dispositif de pré-tension (4) peut s'engager.

6. Engin agricole (8) selon l'une quelconque des revendications précédentes, dans lequel la seconde section d'étrier (31) a une extension supérieure à celle de la première section d'étrier (21) dans au moins un premier sens, de préférence dans deux sens orthogonaux l'un à l'autre.

7. Engin agricole (8) selon l'une quelconque des revendications précédentes, dans lequel la seconde section d'étrier (31) entoure au moins partiellement la première section d'étrier (21) dans au moins trois dimensions orthogonales les unes par rapport aux autres.

8. Engin agricole (8) selon l'une quelconque des revendications précédentes, dans lequel la section de fixation comporte au moins une seconde section de verrouillage (62) qui peut s'engager dans le dispositif de fixation (1) afin d'interagir avec au moins une première section de verrouillage correspondante (25) du collier (2), de sorte qu'un mouvement relatif entre l'outil (6) et le collier (2) est empêché dans un sens le long de la section de fixation.

9. Engin agricole (8) selon la revendication 8, dans lequel ladite au moins une seconde section de verrouillage (62) est un retrait qui peut être fixé à l'outil (6) pour interagir avec au moins une tige (22a,22b) du collier (2) du dispositif de fixation, de sorte que la section de fixation (61) est fixée de manière amovible à au moins une des tiges (22a,22b).

10. Procédé de fixation amovible d'un outil de travail du sol (6) à un support (5) comprenant :
la fixation d'une section de fixation (61) de l'outil (6) au support (5) en utilisant un collier (2) de manière à ce que le collier s'engage dans la section de fixation et entoure le support (5),
la fixation d'un élément de butée (3 sur la face opposée du support (5), de sorte que l'élément de butée (3) porte sur le support (5) et entoure le collier (2), et
la précontrainte de l'élément de butée (3) et du collier (2) l'un vers l'autre sur ladite face opposée du support, de sorte que le collier (2) précontraint la section de fixation (61) vers le support (5),
un dispositif de pré-tension (4) étant disposé en engagement anti-rotatif avec un élément parmi le collier (2) et l'élément de butée (3), le dispositif de pré-tension (4) intervenant pour précontraindre l'autre élément parmi le collier (2) et l'élément de butée (3) vers l'autre, et
**caractérisé en ce que** le procédé comprend en outre
l'établissement d'un verrouillage en fonction de la forme entre le collier (2) et la section de fixation (61), de sorte que le mouvement relatif entre le collier et la section de fixation dans un sens le long de la section de fixation est contré.

11. Procédé selon la revendication 10, dans lequel l'étape de fixation de la section de fixation (61) au support (5) comprend le fait d'amener la section de fixation (61) à s'engager dans une ouverture respective (23a, 23b) de la tige respectif (22a, 22b) du collier (2).

12. Procédé selon l'une quelconque des revendications 10 ou 11, ce procédé comprenant des étapes dans l'ordre suivant :
étape 1 : au moins une première partie (41) d'un dispositif de pré-tension (4) est amenée en engagement avec le collier (2),
étape 2 : le collier (2) est fixé au support (5),
étape 3 : la section de fixation (61) est amenée en engagement avec le collier (2), et
étape 4 : le dispositif de pré-tension (41,43) fonctionne pour précontraindre la section de fixation (61) vers le support (5).

13. Procédé selon la revendication 12, dans lequel l'élément de butée (3) est fixé au collier (2) une fois que la section de fixation (61) a été amenée en engagement avec le collier (2).

14. Procédé selon la revendication 12, dans lequel l'élément de butée (3) est fixé au collier (2) avant que la section de fixation (61) ait été amenée en engagement avec le collier (2), de préférence avant que le collier soit fixé au support (5).

15. Procédé selon la revendication 14, dans lequel une seconde partie (43) du dispositif de pré-tension est amenée en engagement avec la première partie (41) du dispositif de pré-tension avant que la section de fixation (61) ait été amenée en engagement avec le collier (2), de préférence avant que le collier soit fixé au support (5).
